# EUROPÄISCHE PATENTSCHRIFT

(11) **EP 1 857 486 B1**
(45) Veröffentlichungstag und Bekanntmachung des Hinweises auf die Patenterteilung: **04.12.2013**
(21) Anmeldenummer: 07106915.7
(22) Anmeldetag: 25.04.2007
(51) Int. Cl.: C08G 65/40

(54) **Verfahren zur Herstellung von Polyarylenetherketonen**
Method for manufacturing polyarylene ether ketones
Procédé destiné à la fabrication de polyarylenetherketons

(30) Priorität: 15.05.2006 DE 102006022550
(43) Veröffentlichungstag der Anmeldung: 21.11.2007
(73) Patentinhaber: Evonik Degussa GmbH, 45128 Essen (DE)
(72) Erfinder: Richter, Alexander, 45739, Oer-Erkenschwick (DE); Schiemann, Vera, 45772, Marl (DE); Maul, Jürgen, 45772, Marl (DE); Günzel, Bernd, 45721, Haltern am See (DE)

(56) Entgegenhaltungen:
- EP-A- 0 297 784
- EP-A1- 0 000 361
- EP-A2- 0 358 017
- US-A- 4 820 790

## Beschreibung

Gegenstand der Erfindung ist ein Verfahren zur Herstellung von Polyarylenetherketonen (PAEK), bei dem die gewünschte Molmasse gezielt eingestellt werden kann.

Polyarylenetherketone werden in einer gebräuchlichen Herstellungsmethode durch Polykondensation hergestellt. Bei dieser sogenannten nucleophilen Route wird eine geeignete organische Diolverbindung mit einer geeigneten organischen Dihalogenverbindung zur Reaktion gebracht. Die Reaktion wird üblicherweise in einem Lösemittel wie beispielsweise Diphenylsulfon unter Verwendung von sogenannten Hilfsbasen durchgeführt, die als feste Bestandteile in der Reaktionsmischung vorliegen; üblicherweise setzt man hier eine Mischung aus Natriumcarbonat und Kaliumcarbonat in annähernd stöchiometrischer Menge ein. Diese Herstellungsmethode ist in einer Vielzahl von Patentanmeldungen beschrieben, beispielsweise in EP-A-0 001 879, EP-A-0 182 648 und EP-A-0 244 167. Üblicherweise werden für die Herstellung von PAEK aromatische Difluorverbindungen und Bisphenole verwendet; so wird bei der Herstellung von Polyetheretherketon (PEEK) gemäß der nucleophilen Route als Diolkomponente Hydrochinon und als Dihalogenkomponente das 4.4'-Difluorbenzophenon eingesetzt.

Durch genaue Einwaage der Monomere und damit gezielte Einstellung des molaren Monomerverhältnisses ist es möglich, auf das Endprodukt Einfluss zu nehmen. Nachteilig ist jedoch, dass diese Methode nicht zu einer zufriedenstellenden Reproduzierbarkeit führt, da während der Reaktion mit dem Gasstrom (Wasserdampf und Kohlendioxid aus der Reaktion der Hilfsbase mit der Diolkomponente) unkontrolliert Monomere aus dem Reaktionsgemisch ausgetragen werden und damit das molare Verhältnis aus der genauen Einwaage gestört wird. Auf diese Weise erhält man ein Polymer mit nicht ausreichender Molmasse. Versucht man, dem bereits bei der Einwaage Rechnung zu tragen, kann der umgekehrte Fall eintreten, dass nämlich die Molmasse so hoch wird, dass sich das Reaktionsgemisch nur noch schwierig ausfahren und aufarbeiten lässt. Das so erhaltene Polymer ist dann wegen der hohen Schmelzviskosität unter Umständen nur noch sehr schwer zu verarbeiten.

In EP 0 358 017 A2 wird ein Verfahren beschrieben, bei dem in einer Vorreaktion zunächst hauptsächlich weniger reaktive Dichlorverbindung mit einem Überschuss an Bisphenol umgesetzt und anschließend die Reaktion nach Zusatz mindestens der Hälfte an Difluorverbindung zu Ende geführt wird. Nach dem in EP 0 297 784 A2 beschriebenen Verfahren werden Copolymere hergestellt, indem zunächst eine erste Monomerzusammensetzung polykondensiert wird, worauf anschließend eine zweite Monomerzusammensetzung zugegeben und polykondensiert wird. In US 4 820 790 wird ein Verfahren beschrieben, bei dem zunächst gezielt Oligomere hergestellt werden, die dann zu hochmolekularem Material gekoppelt werden.

Da von Seiten der Anwender ein genaues Einhalten der Produktspezifikationen verlangt wird, stellte sich die Aufgabe, ein Verfahren zur Herstellung von Polyarylenetherketonen zu entwickeln, mit dem man die Molmasse bessern steuern und kontrollieren kann.

Diese Aufgabe wird durch ein Verfahren gelöst, bei dem bei der Umsetzung einer aromatischen Dihalogenverbindung mit einem Bisphenol in Gegenwart von Alkali- und/oder Erdalkalicarbonat oder -hydrogencarbonat in einem hochsiedenden Lösemittel zu einem PAEK die Molmasse eingestellt wird, indem im Verlauf der Polykondensationsreaktion die Molmasse durch erneute Zugabe eines Bisphenols oder einer organischen Halogenverbindung auf den Zielwert gebracht wird.

Beispiele geeigneter aromatischer Dihalogenverbindungen sind 4,4`-Difluorbenzophenon, 4.,4'-Dichlorbenzophenon, 4,4'-Dichlordiphenylsulfon, 4,4-Difluordiphenylsulfon, 1,4-Bis(4-fluorbenzoyl)benzol, 1,4-Bis(4-chlorbenzoyl)benzol, 4-Chlor-4'-fluorbenzophenon und 4,4'-Bis(4-fluorbenzoyl)biphenyl. Die Halogengruppe ist im Allgemeinen durch eine para-ständige Carbonyl- oder Sulfonylgruppe aktiviert. Im Falle einer para-ständigen Carbonylgruppe ist das Halogen Chlor oder bevorzugt Fluor; im Falle einer para-ständigen Sulfonylgruppe kann das Halogen Fluor oder Chlor sein, wobei wegen ausreichender Reaktivität und niedrigerer Kosten hier im Allgemeinen Chlor als Halogen bevorzugt wird. Es können auch Mischungen verschiedener Dihalogenverbindungen eingesetzt werden.

Beispiele geeigneter Bisphenole sind Hydrochinon, 4,4'-Dihydroxybenzophenon, 4,4'-Dihydroxydiphenylsulfon, 2,2'-Bis(4-hydroxyphenyl)propan, 4,4'-Dihydroxybiphenyl, Bis(4-hydroxyphenyl)ether, Bis(4-hydroxyphenyl)thioether, Bis(4-hydroxynaphthyl)ether, 1,4-, 1,5-oder 2,6-Dihydroxynaphthalin, 1,4-Bis(4-hydroxybenzoyl)benzol, 4,4'-Bis(4-hydroxybenzoyl)biphenyl, 4,4'-Bis(4-hydroxybenzoyl)diphenylether oder 4,4-Bis(4-hydroxybenzoyldiphenylthioether. Selbstverständlich können auch Mischungen verschiedener Bisphenole eingesetzt werden.

Geeignete Alkali- und Erdalkalicarbonate und -hydrogencarbonate leiten sich von Lithium, Natrium, Kalium, Rubidium, Caesium, Magnesium, Calcium, Strontium oder Barium her.

Üblicherweise wird gemäß dem Stand der Technik ein Gemisch aus Natriumcarbonat und Kaliumcarbonat eingesetzt. Vom Alkali- oder Erdalkalicarbonat oder -hydrogencarbonat wird üblicherweise ein geringer Überschuss eingesetzt, beispielsweise ein Überschuss von ca. 5 % über die stöchiometrische Menge.

Das hochsiedende aprotische Lösemittel ist gemäß dem Stand der Technik vorzugsweise eine Verbindung der Formel 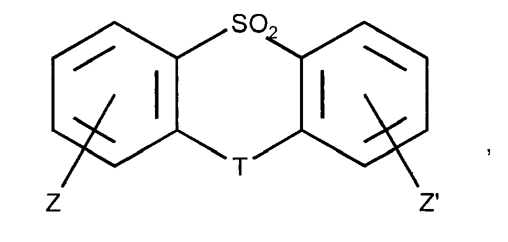 wobei T eine direkte Bindung, ein Sauerstoffatom oder zwei Wasserstoffatome darstellt; Z und Z' sind Wasserstoff oder Phenylgruppen. Bevorzugt handelt es sich hier um Diphenylsulfon.

Das PAEK enthält Einheiten der Formeln

(-Ar-X-) und (-Ar'-Y-),

wobei Ar und Ar' einen zweiwertigen aromatischen Rest darstellen, vorzugsweise 1,4-Phenylen, 4,4'-Biphenylen sowie 1,4-, 1,5- oder 2,6-Naphthylen. X ist eine elektronenziehende Gruppe, bevorzugt Carbonyl oder Sulfonyl, während Y eine andere Gruppe wie O, S, CH₂, Isopropyliden oder dergleichen darstellt. Hierbei sollten mindestens 50 %, bevorzugt mindestens 70 % und besonders bevorzugt mindestens 80 % der Gruppen X eine Carbonylgruppe darstellen, während mindestens 50 %, bevorzugt mindestens 70 % und besonders bevorzugt mindestens 80 % der Gruppen Y aus Sauerstoff bestehen sollten.

In der insbesondere bevorzugten Ausführungsform bestehen 100 % der Gruppen X aus Carbonylgruppen und 100 % der Gruppen Y aus Sauerstoff. In dieser Ausführungsform kann das PAEK beispielsweise ein Polyetheretherketon (PEEK; Formel I), ein Polyetherketon (PEK; Formel II), ein Polyetherketonketon (PEKK; Formel III) oder ein Polyetheretherketonketon (PEEKK; Formel IV) sein, jedoch sind natürlich auch andere Anordnungen der Carbonyl- und Sauerstoffgruppen möglich.

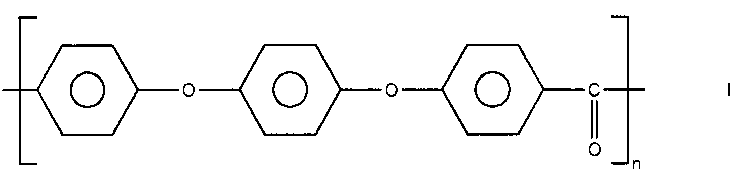

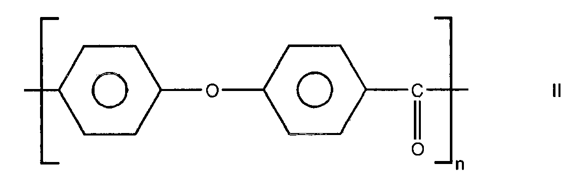

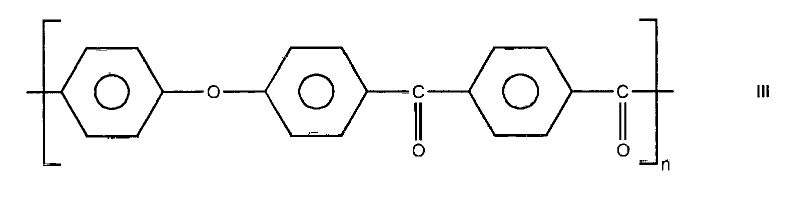

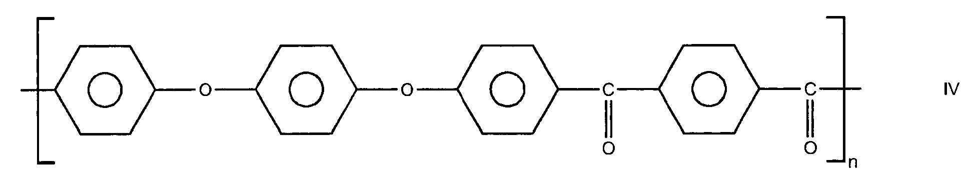

Das PAEK ist im Allgemeinen teilkristallin, was sich beispielsweise in der DSC-Analyse durch Auffinden eines Kristallitschmelzpunkts Tₘ äußert, der größenordnungsmäßig in den meisten Fällen um 300 °C oder darüber liegt. Jedoch ist die Lehre der Erfindung auch auf amorphe PAEK anwendbar. Im Allgemeinen gilt, dass Sulfonylgruppen, Biphenylengruppen, Naphthylengruppen oder sperrige Gruppen Y, wie z. B. eine Isopropylidengruppe, die Kristallinität verringern.

Bei der erfindungsgemäßen Herstellung des PAEK liegt das molare Verhältnis von Bisphenol zu Dihalogenverbindung im Bereich von 1 : 1,001 bis 1 : 1,05. Dies gilt insbesondere auch bei der Herstellung von PEEK aus Hydrochinon und 4,4'-Difluorbenzophenon. Üblicherweise wird eine Konzentration von 25 bis 35 Gew.-% Polymer (bezogen auf das Lösemittel) eingestellt. Weiterhin ist bevorzugt, dass, dem Stand der Technik entsprechend, als Hilfsbase eine Mischung aus Natriumcarbonat und Kaliumcarbonat im Gewichtsverhältnis von etwa 100 : 5 eingesetzt wird. Aufgrund der vorgegebenen Reaktivität der funktionellen Gruppen sowie der Schwerlöslichkeit des PAEK bei niedrigeren Temperaturen wird die Reaktion üblicherweise im Temperaturbereich von ca. 200 bis 400 °C durchgeführt, wobei der Bereich von ca. 250 bis 350 °C bevorzugt ist. Die Reaktionsendtemperatur liegt vorzugsweise im Bereich von 300 °C bis 320 °C. Da die Viskosität des Reaktionsgemisches eine Funktion der Molmasse des Polymeren ist, kann der Reaktionsfortschritt anhand der Viskosität der Lösung bestimmt werden, was nach jeder Methode des Standes der Technik geschehen kann. Beispielsweise kann die Viskosität über das vom Antrieb des Rühraggregates aufzubringende Drehmoment ermittelt werden.

Das zum Erreichen der Zielviskosität in der Regel nach dem Abklingen der Reaktion zudosierte Bisphenol kann jedes beliebige Bisphenol sein; Beispiele hierfür sind die gleichen wie oben für die Hauptreaktion angegeben. Meist empfiehlt sich, das gleiche Bisphenol wie bei der Hauptreaktion einzusetzen. Unter "Abklingen der Reaktion" versteht man den Zeitpunkt, von dem ab bis zum vollständigen Ende der Reaktion die Viskosität nur noch maximal um 20 %, bevorzugt maximal um 15 %, besonders bevorzugt maximal um 10 %, insbesondere bevorzugt maximal um 5 % und ganz besonders bevorzugt nur noch maximal um 2,5 % zunimmt.

Als organische Halogenverbindung kann jede Halogenverbindung eingesetzt werden, die in der Lage ist, mit einem Phenolatanion unter Substitution zu reagieren. Geeignete Halogenverbindungen sind beispielsweise Methylchlorid, Methylbromid, Methyliodid, Ethylchlorid, Allylchlorid, Propargylchlorid, Benzylchlorid, darüber hinaus die gleichen Dihalogenverbindungen wie oben für die Hauptreaktion angegeben sowie entsprechende Monohalogenverbindungen, beispielsweise 4-Fluorbenzophenon oder 4-Chlordiphenylsulfon.

Grundsätzlich gibt es darüber hinaus eine Vielzahl von gleichwirkenden Verbindungen mit guter Abgangsgruppe wie beispielsweise Dimethylsulfat, Methyltosylat oder 4-Nitrobenzophenon; deren Einsatz ist dem Einsatz einer Halogenverbindung äquivalent.

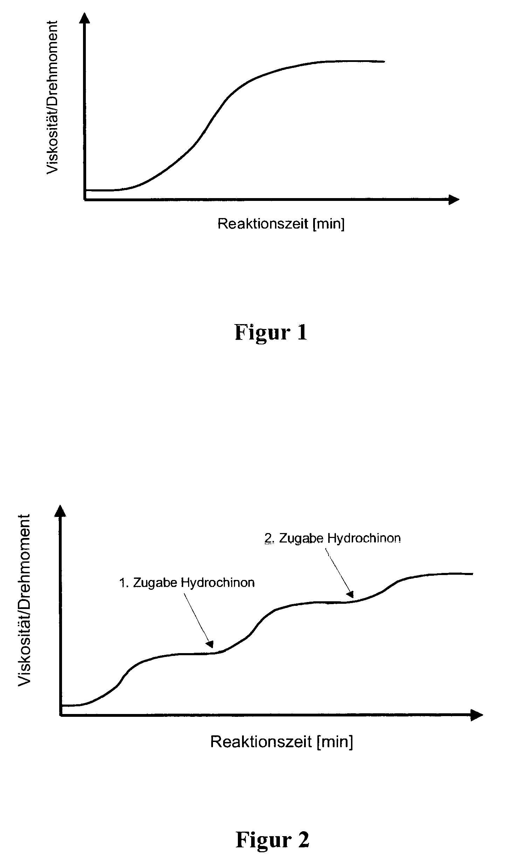

Der übliche Verlauf der Polykondensationsreaktion ist in der Figur 1 dargestellt und zeigt schematisch den ungestörten Ablauf der Reaktion als sigmoidale Kurve, wenn man die Viskosität bzw. das Drehmoment als Funktion der Reaktionszeit darstellt.

Grundsätzlich wird nach dem Abklingen der Polykondensationsreaktion ein Bisphenol dann zudosiert, wenn wegen der bereits aufgezeigten Probleme wie Störung der Stöchiometrie durch ungenaue Einwaage mit resultierendem Unterschuss an Bisphenol oder Verlust von Bisphenol durch den Gasstrom aus dem Reaktor das Produkt nicht die gewünschte hohe Viskosität in der Reaktionsmischung zeigt. Durch gezieltes Zudosieren von Bisphenol aus einem externen Gefäß in die Reaktionsmischung ist es möglich, die Reaktion erneut zu starten und gezielt weiterlaufen zu lassen. Dieser Verfahrensschritt ist mehrfach wiederholbar. In der Figur 2 ist dies am Beispiel der Herstellung von PEEK aus 4.4'-Difluorbenzophenon und Hydrochinon dargestellt.

Genauso kann dann, wenn die Stöchiometrie so gestört ist, dass das Bisphenol im Überschuss vorliegt, nach dem Abklingen der Reaktion eine aromatische Dihalogenverbindung der Art, wie sie auch für die Hauptreaktion verwendet werden kann, aus einem externen Gefäß gezielt in die Reaktionsmischung zudosiert werden, um die Reaktion erneut zu starten und gezielt weiterlaufen zu lassen. Auch dieser Verfahrensschritt ist mehrfach wiederholbar.

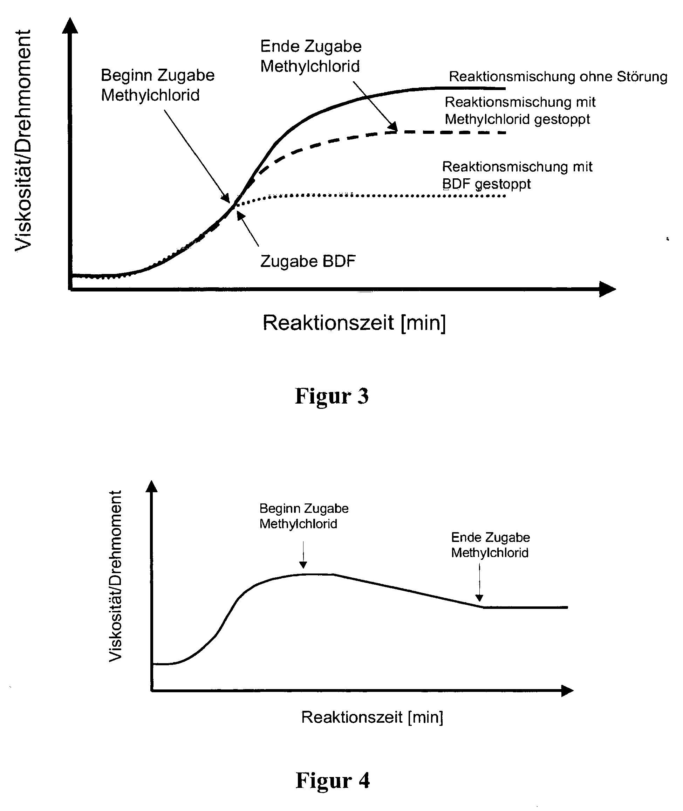

Sollte wegen Störung der Stöchiometrie durch ungenaue Einwaage oder Verlust der Monomere durch den Gasstrom aus dem Reaktor der Reaktionsverlauf so sein, dass das Produkt die gewünschte Viskosität zu überschreiten droht, kann durch Zugabe einer organischen Halogenverbindung, z. B. Methylchlorid oder 4.4'-Difluorbenzophenon in den Reaktor die Reaktion gedrosselt oder sofort abgestoppt werden. Die Figur 3 zeigt schematisch die unterschiedlichen Reaktionsverläufe bei Einsatz von entweder Methylchlorid oder 4.4'-Difluorbenzophenon (BDF).

Sollte trotz dieser Gegenmaßnahmen die Viskosität der Reaktionsmischung höher als gewünscht ausfallen, so hat man die Möglichkeit, durch verlängertes Einleiten einer organischen Monohalogenverbindung wie z. B. Methylchlorid in die Reaktionsmischung die Viskosität gezielt abzusenken. Nach einer Induktionsphase werden die Polymerketten durch das Methylchlorid abgebaut, was sich in der fallenden Viskosität der Reaktionslösung äußert. Wird die Zufuhr von Methylchlorid in die Lösung beendet, dann stoppt der Abbau der Polymerketten und die Viskosität bleibt konstant. Die Figur 4 zeigt den Verlauf schematisch.

Der Zielwert der Molmasse des PAEK entspricht einer Lösungsviskosität in Form des J-Werts, gemessen gemäß DIN EN ISO 307 in 97-prozentiger H₂SO₄ (250 mg in 50 ml; 25 °C), von 80 bis 150 ml/g.

Nach beendeter Reaktion wird das Produkt gemäß dem Stand der Technik aufgearbeitet. Das erhaltene PAEK liegt nach der Aufarbeitung in Partikelform vor. Es kann in dieser Form direkt verwendet werden, z. B. als Beschichtungsmaterial, es kann aber auch granuliert und hierbei, falls gewünscht, durch Zusatz weiterer Stoffe, wie Füllstoffe, Pigmente, Stabilisatoren, andere Polymere, Verarbeitungshilfsmittel und dergleichen, zu Compounds verarbeitet werden. Geeignete Compounds, ihre Herstellung und Verwendung sind dem Fachmann bekannt.

Die Erfindung wird im Folgenden beispielhaft erläutert.

### Vergleichsbeispiel 1 (ohne Eingriff in die Polykondensation):

In einem Doppelmantelreaktor wurden bei 60 °C 34,6 kg Diphenylsulfon, 13,1 kg 4.4'-Difluorbenzophenon (60,03 mol), 6,6 kg Hydrochinon (59,93 mol), 6,6 kg Natriumcarbonat und 320 g Kaliumcarbonat in fester Form nacheinander zugegeben. Der Reaktor wurde verschlossen und mit Stickstoff inertisiert. Nachdem die Manteltemperatur 160 °C erreicht hatte, wurde der Rührer mit 50 upm zugeschaltet. Als die Innentemperatur ebenfalls 160 °C erreicht hatte, wurde langsam auf 320 °C aufgeheizt. Über das Drehmoment, das aus der Stromaufnahme am Rührmotor bestimmt wurde, konnte der Reaktionsverlauf beobachtet werden. Das Drehmoment stieg nach ca. 6 Stunden an und pendelte sich nach weiteren etwa 2 Stunden auf einem konstanten Bereich ca. 55 % über dem Anfangsniveau ein. Das Produkt wurde ausgefahren, abgekühlt, zerkleinert und gemäß dem Stand der Technik aufgearbeitet. Der J-Wert des Produkts betrug 134 ml/g.

### Beispiel 1 (Eingriff in die Polykondensation mittels Methylchlorid):

In einem Doppelmantelreaktor wurden bei 60 °C 34,6 kg Diphenylsulfon (60,03 mol), 13,1 kg 4.4'-Difluorbenzophenon (59,93 mol), 6,6 kg Hydrochinon, 6,6 kg Natriumcarbonat und 320 g Kaliumcarbonat in fester Form nacheinander zugegeben. Der Reaktor wurde verschlossen und mit Stickstoff inertisiert. Nachdem die Manteltemperatur 160 °C erreicht hatte, wurde der Rührer mit 50 upm zugeschaltet. Als die Innentemperatur ebenfalls 160 °C erreicht hatte, wurde langsam auf 320 °C aufgeheizt. Über das Drehmoment, das aus der Stromaufnahme am Rührmotor bestimmt wurde, konnte der Reaktionsverlauf beobachtet werden. Das Drehmoment stieg nach ca. 6 Stunden an und signalisierte den Beginn der Reaktion. Etwa 30 Minuten danach lag das Drehmoment ca. 25 % über dem Ausgangswert. Durch eine Düse im unteren Teil des Reaktors wurde Methylchlorid in einer Menge von 20 Normliter/Stunde in den Kessel eingedrückt. Im Laufe des Einleitens wurde ein Verflachen des Drehmomentanstiegs beobachtet. Nach etwa 1 Stunde wurde die Zugabe des Methylchlorids gestoppt und das Drehmoment pegelte sich auf einem konstanten Bereich ca. 42 % über dem Anfangsniveau ein. Das Produkt wurde ausgefahren, abgekühlt, zerkleinert und gemäß dem Stand der Technik aufgearbeitet. Der J-Wert des Produkts betrug 122 ml/g.

### Beispiel 2 (Eingriff in die Polykondensation mittels BDF):

Es wurde zunächst wie im Beispiel 1 vorgegangen. Als das Drehmoment nach insgesamt ca. 6,5 Stunden ca. 25 % über dem Ausgangswert lag, wurden durch eine Öffnung im Deckel des Reaktors 1000 g 4.4'-Difluorbenzophenon in kurzer Zeit aus einem Vorlagebehälter in den Reaktor befördert. Ca. 10 Minuten nach der BDF-Zugabe schwenkte das Drehmoment ein und verblieb auf einem konstanten Niveau für weitere 2,5 Stunden. Das Niveau des Drehmoments nach BDF-Zugabe lag konstant bei ca. 27 % über dem Ausgangswert. Das Produkt wurde ausgefahren, abgekühlt, zerkleinert und gemäß dem Stand der Technik aufgearbeitet. Der J-Wert des Produkts betrug 81 ml/g.

### Beispiel 3 (Eingriff in die Polykondensation mittels Methylchlorid nach Ende der Polykondensation):

Es wurde zunächst wie im Vergleichsbeispiel 1 vorgegangen. Das Drehmoment stieg nach ca. 6,5 Stunden an und pegelte sich nach weiteren etwa 2,5 Stunden auf einem konstanten Bereich ca. 53 % über dem Anfangsniveau ein. Nachdem das Niveau für weitere 30 Minuten gehalten wurde, wurde durch eine Düse im unteren Teil des Reaktors Methylchlorid in einer Menge von 20 Normliter/Stunde in den Kessel eingedrückt. Nach ca. 40 Minuten wurde ein leichter Abfall im Drehmoment gemessen, der sich über weitere 4 Stunden Versuchszeit fortsetzte. Danach wurde die Methylchloridzugabe beendet. Das Drehmoment schwenkte nach weiteren ca. 30 Minuten auf einem konstanten Niveau ca. 46 % über dem Ausgangswert zu Beginn der Reaktion ein. Das Produkt wurde ausgefahren, abgekühlt, zerkleinert und gemäß dem Stand der Technik aufgearbeitet. Der J-Wert des Produkts betrug 126 ml/g.

### Beispiel 4 (Eingriff in die Polykondensation durch portionsweise Zugabe von Hydrochinon):

In einen Doppelmantelreaktor wurden bei 60 °C 34,6 g Diphenylsulfon, 13,1 kg 4.4'-Difluorbenzophenon (60,03 mol), 6,5 kg Hydrochinon (59,03 mol), 6,6 kg Natriumcarbonat und 320 g Kaliumcarbonat in fester Form nacheinander zugegeben. Der Reaktor wurde verschlossen und mit Stickstoff inertisiert. Nachdem die Manteltemperatur 160 °C erreicht hatte, wurde der Rührer mit 50 upm zugeschaltet. Als die Innentemperatur ebenfalls 160 °C erreicht hatte, wurde langsam auf 320 °C aufgeheizt. Über das Drehmoment, das aus der Stromaufnahme am Rührmotor bestimmt wurde, konnte der Reaktionsverlauf beobachtet werden. Das Drehmoment stieg nach ca. 5 Stunden an und signalisierte den Beginn der Reaktion. Etwa 5 Stunden danach lag das Drehmoment konstant ca. 15 % über dem Ausgangswert. In einem separaten, beheizbaren und gerührten Gefäß wurde eine Mischung aus 10 Gew.-Teilen Diphenylsulfon und 1 Gew.-Teil Hydrochinon bei 180 °C aufgeschmolzen. Über eine Rohrleitung wurden 400 ml dieser Mischung in den Reaktor geleitet. Nach ca. 10 Minuten konnte über die Stromaufnahme am Rührmotor eine Erhöhung der Viskosität beobachtet werden, die eine Weiterreaktion des Polymers anzeigte. Nach ca. 1 Stunde war das Drehmoment auf ca. 25 % über dem Ausgangswert gestiegen und blieb konstant. Der Schritt wurde mit weiteren 400 ml der Diphenylsulfon-Hydrochinon-Mischung wiederholt und nach 1 Stunde war das Drehmoment auf ca. 35 % über dem Ausgangswert gestiegen und blieb konstant. Eine nochmalige Wiederholung dieses Schrittes mit 300 ml der Diphenylsulfon-Hydrochinon-Mischung resultierte in einem erneuten Anstieg des Drehmoments; nach 1 Stunde wurde ein Wert von ca. 60 % über dem Ausgangswert erreicht; dieser Wert blieb während weiterer 1,5 Stunden konstant. Danach wurde das Produkt ausgefahren, abgekühlt, zerkleinert und gemäß dem Stand der Technik aufgearbeitet. Der J-Wert des Produkts betrug 138 ml/g.

## Patentansprüche

1. Verfahren zur Herstellung eines Polyarylenetherketons,
**dadurch gekennzeichnet,**
**dass** bei der Umsetzung eines Bisphenols mit einer aromatischen Dihalogenverbindung im molaren Verhältnis von 1 : 1,001 bis 1 : 1,05 in Gegenwart von Alkali- und/oder Erdalkalicarbonat in einem hochsiedenden Lösemittel die Molmasse eingestellt wird,
indem im Verlauf der Polykondensation die Molmasse durch erneute Zugabe eines Bisphenols oder einer organischen Halogenverbindung auf den Zielwert gebracht wird,
der einer Lösungsviskosität in Form des J-Werts, gemessen gemäß DIN EN ISO 307 in 97-prozentiger H₂SO₄ (250 mg in 50 ml; 25 °C), von 80 bis 150 ml/g entspricht.

2. Verfahren gemäß Anspruch 1,
**dadurch gekennzeichnet,**
**dass** bei Unterschuss an Bisphenol nach dem Abklingen der Polykondensationsreaktion die Reaktion durch Zugabe eines Bisphenols neu gestartet wird.

3. Verfahren gemäß Anspruch 1,
**dadurch gekennzeichnet,**
**dass** bei Unterschuss an Dihalogenverbindung nach dem Abklingen der Polykondensationsreaktion die Reaktion durch Zugabe einer aromatischen Dihalogenverbindung neu gestartet wird.

4. Verfahren gemäß Anspruch 1,
**dadurch gekennzeichnet,**
**dass** die Polykondensationsreaktion durch Zugabe einer organischen Halogenverbindung gedrosselt oder abgestoppt wird.

5. Verfahren gemäß Anspruch 1,
**dadurch gekennzeichnet,**
**dass** nach dem Abklingen der Polykondensationsreaktion die Molmasse durch Eindosieren einer organischen Monohalogenverbindung in die Reaktionsmischung abgesenkt wird.

6. Verfahren gemäß Anspruch 5,
**dadurch gekennzeichnet,**
**dass** die organische Monohalogenverbindung Methylchlorid ist.

7. Verfahren gemäß einem der vorhergehenden Ansprüche,
**dadurch gekennzeichnet,**
**dass** die bei der Polykondensation eingesetzte aromatische Dihalogenverbindung 4.4'-Difluorbenzophenon und das bei der Polykondensation eingesetzte Bisphenol Hydrochinon ist.

## Claims

1. A process for preparing a polyarylene ether ketone,
**characterized in that**
the molar mass is established in the reaction of a bisphenol with an aromatic dihalogen compound in a molar ratio of from 1:1.001 to 1:1.05 in the presence of alkali metal carbonates and/or alkaline earth metal carbonates in a high-boiling solvent by, in the course of the polycondensation, bringing the molar mass to the target value, which corresponds to a solution viscosity in the form of the J value, measured to DIN EN ISO 307 in 97 percent H₂SO₄ (250 mg in 50 ml; 25°C), of from 80 to 150 ml/g, by again adding a bisphenol or an organic halogen compound.

2. A process according to claim 1,
**characterized in that**,
in the case of deficiency of bisphenol, once the polycondensation reaction has abated, the reaction is started again by adding a bisphenol.

3. A process according to claim 1,
**characterized in that**,
in the case of deficiency of dihalogen compound, once the polycondensation reaction has abated, the reaction is started again by adding an aromatic dihalogen compound.

4. A process according to claim 1,
**characterized in that**
the polycondensation reaction is throttled or stopped by adding an organic halogen compound.

5. A process according to claim 1,
**characterized in that**,
once the polycondensation reaction has abated, the molar mass is lowered by metering an organic monohalogen compound into the reaction mixture.

6. A process according to claim 5,
**characterized in that**
the organic monohalogen compound is methyl chloride.

7. A process according to any one of the preceding claims,
**characterized in that**
the aromatic dihalogen compound used in the polycondensation is 4,4'-difluorobenzophenone and the bisphenol used in the polycondensation is hydroquinone.

## Revendications

1. Procédé pour la préparation d'une polyarylèneéthercétone,
**caractérisé en ce que**
dans la réaction d'un bisphénol avec un composé dihalogéné aromatique en un rapport molaire de 1 : 1,001 à 1 : 1,05 en présence de carbonate de métal alcalin et/ou alcalino-terreux dans un solvant à haut point d'ébullition, on ajuste la masse moléculaire en portant au cours de la polycondensation, par une nouvelle addition d'un bisphénol ou d'un composé halogéné organique, la masse moléculaire à la valeur voulue, qui correspond à une viscosité en solution sous forme de la valeur J, mesurée selon DIN EN ISO 307 dans H₂SO₄ à 97 % (250 mg dans 50 ml ; 25 °C), de 80 à 150 ml/g.

2. Procédé selon la revendication 1,
**caractérisé en ce que**
dans le cas d'insuffisance de bisphénol après l'arrêt de la réaction de polycondensation, on fait de nouveau démarrer la réaction par addition d'un bisphénol.

3. Procédé selon la revendication 1,
**caractérisé en ce que**
dans le cas d'insuffisance de composé dihalogéné après l'arrêt de la réaction de polycondensation, on fait de nouveau démarrer la réaction par addition d'un composé dihalogéné aromatique.

4. Procédé selon la revendication 1,
**caractérisé en ce**
**qu'**on freine ou arrête la réaction de polycondensation par addition d'un composé halogéné organique.

5. Procédé selon la revendication 1,
**caractérisé en ce**
**qu'**après l'arrêt de la réaction de polycondensation, on abaisse la masse moléculaire par introduction dosée d'un composé monohalogéné organique dans le mélange réactionnel.

6. Procédé selon la revendication 5,
**caractérisé en ce que**
le composé monohalogéné organique est le chlorure de méthyle.

7. Procédé selon l'une quelconque des revendications précédentes,
**caractérisé en ce que**
le composé dihalogéné aromatique utilisé dans la polycondensation est la 4,4'-difluorobenzophénone et le bisphénol utilisé dans la polycondensation est l'hydroquinone.
